# EUROPÄISCHE PATENTSCHRIFT

(11) **EP 0 638 886 B1**
(45) Veröffentlichungstag und Bekanntmachung des Hinweises auf die Patenterteilung: **11.11.1998**
(21) Anmeldenummer: 94110068.7
(22) Anmeldetag: 29.06.1994
(51) Int. Cl.: G08C 15/00, H04L 12/28

(54) **Verfahren zur Übermittlung einer Nachricht zwischen zwei Teilnehmerstationen und Einrichtung zur Durchführung des Verfahrens**
Method for transmitting a message between two subscriber stations und device for performing the method
Méthode pour la transmission d'un message entre deux stations d'abonnés et dispositif pour la mise en oeuvre de la méthode

(30) Priorität: 12.08.1993 CH 2394/93
(43) Veröffentlichungstag der Anmeldung: 15.02.1995
(73) Patentinhaber: Landis & Gyr Technology Innovation AG, 6301 Zug (CH)
(72) Erfinder: Barbey, Patrick, CH-6314 Unterägeri (CH)
(74) Vertreter: Müller, Hans-Jürgen, Dipl.-Ing.

(56) Entgegenhaltungen:
- WO-A-89/04517
- CH-A- 682 196

## Beschreibung

Die Erfindung bezieht sich auf ein Verfahren zur Übermittlung einer Nachricht zwischen zwei Teilnehmerstationen sowie auf eine Vorrichtung zur Durchführung des Verfahrens gemäss den Oberbegriffen der Ansprüche 1 und 4.

Das Verfahren kann überall dort eingesetzt werden, wo mit leistungsarmen Sendern grosse Distanzen zu überbrücken sind.

Beispielsweise wird das Verfahren vorteilhaft zur Fernablesung von Elektrizitätszählern über das Energieverteilungsnetz, zur Kommunikation in einem Haus (domestic bus) oder zur Rundsteuerung verwendet.

Es ist ein Verfahren zur Übermittlung einer Nachricht zwischen zwei als Sender- und Empfängerstation ausgelegten Teilnehmerstationen eines Kommunikationsnetzes mit mehreren an einem gemeinsamen Übertragungsmedium angeschlossenen Teilnehmerstationen bekannt (P. Schicker: Datenübertragung und Rechnernetze, Teubner, Stuttgart 1988 und CH Patentgesuch 01442/92-3), bei welchem die Nachricht vor einem ersten Aussenden mit einem Kreditwert versehen wird. Solange der Kredit vorhanden ist, sendet jede Teilnehmerstation die empfangene Nachricht nach einer Verminderung des Kredits synchron wieder aus.

Sind zwei oder mehrere Teilnehmerstationen örtlich sehr nahe beieinander am Übertragungsmedium angeschlossen, so wie dies beispielsweise bei Elektrizitätszählern an einem Energieverteiler eines Gebäudes der Fall ist, können sich durch Interferenzen der Sendersignale verursachte Übertragungsprobleme ergeben, wenn die Frequenzen der Sendersignale nicht genau übereinstimmen.

Zur Verhinderung von Informationsverlust durch Interferenz der Sendersignale, wird bei der bekannten Teilnehmerstation die Phase der Trägerschwingung für das Sendersignal durch ein Korrektursignal mit dem am Übertragungsmedium liegenden Summensignal synchronisiert.

Der Erfindung liegt die Aufgabe zugrunde, für ein Kommunikationsnetz mit mehreren Teilnehmerstationen zur Übermittlung einer Nachricht zwischen zwei oder mehreren Teilnehmerstationen ein Verfahren anzugeben, welches auch dann erfolgreich ausführbar ist, wenn im Kommunikationsnetz zwei oder auch mehrere Teilnehmerstationen örtlich unmittelbar beieinander angeordnet sind, und auch eine Einrichtung zu schaffen, mit welcher das Verfahren durchführbar ist.

Die genannte Aufgabe wird erfindungsgemäss durch die Merkmale der Ansprüche 1 und 4 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: ein Blockschaltbild eines Teils einer Teilnehmerstation,
- Fig. 2: ein Kommunikationsnetz mit vier Exemplaren der Teilnehmerstation,
- Fig. 3: ein Schichtmodell der Teilnehmerstation,
- Fig. 4: sechs mit Adressen versehene Exemplare der Teilnehmerstation des Kommunikationsnetzes und
- Fig. 5: ein Diagramm zu einem Konfigurationsdienst.

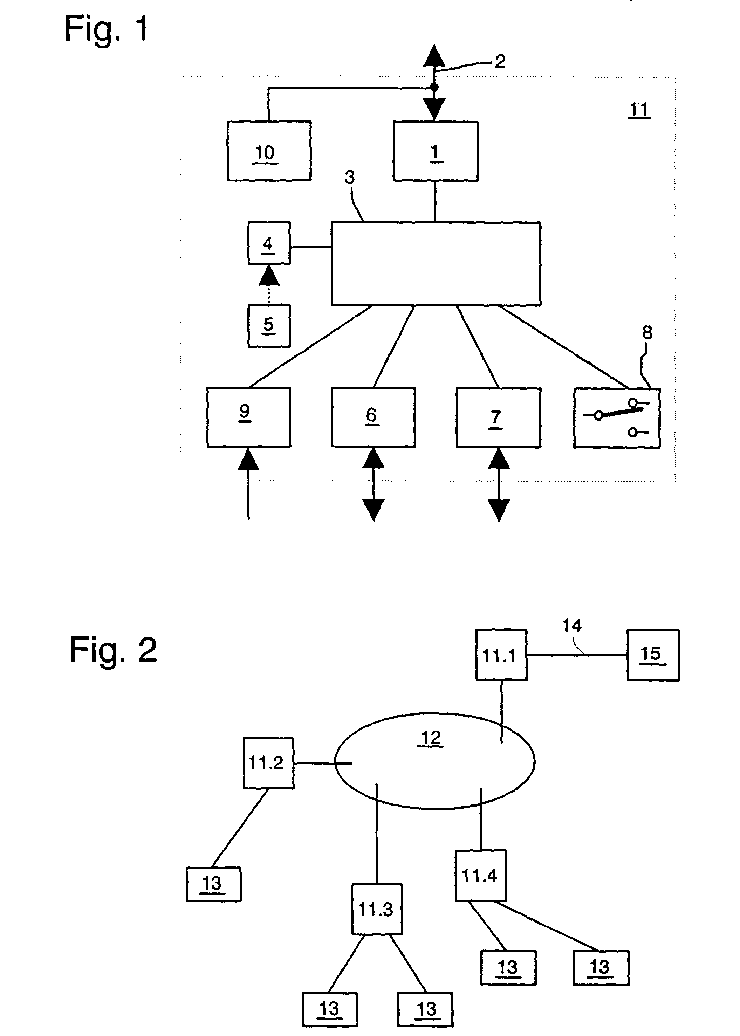

In der Fig. 1 bedeutet 1 ein zwischen das Übertragungsmedium 2 eines auch als Kommunikationsnetz verwendbaren Energieverteilungsnetzes und einen Prozessrechner 3 geschalteter Modulator/Demodulator (MODEM). Der Prozessrechner 3 verfügt über einen Konfigurationsspeicher 4, dessen Inhalt bei Bedarf mittels eines Bedienungselementes 5 auch manuell veränderbar ist. Im weiteren ist der Prozessrechner 3 mit mindestens einer Anpassungsschaltung (Interface) verbunden. Die Anpassungsschaltung ist beispielsweise eine Kommunikationsschnittstelle 6, eine weitere Kommunikationsschnittstelle 7, eine vom Prozessrechner 3 steuerbare Schaltereinheit 8 oder ein Eingabekanal 9 für einen nicht dargestellten Sensor. Mit 10 ist eine mit dem Energieversorgungsnetz verbundene Speisungseinheit bezeichnet.

Das Bedienungselement (5) ist vorzugsweise ein binärer Schalter.

Der Modulator/Demodulator 1, der Prozessrechner 3 mit dem Konfigurationsspeicher 4, das Bedienungselement 5, die Anpassungsschaltung 6 bzw. 7 bzw. 8 bzw. 9 und die Speisungseinheit 10 sind Einheiten einer in der Zeichnung nicht vollständig dargestellten Teilnehmerstation 11, die als Sender und/oder Empfänger von Nachrichten in einem Kommunikationsnetz einsetzbar ist. Anzahl und Art der vorhandenen Anpassungsschaltungen 6 bzw. 7 bzw. 8 bzw. 9 sind den Anforderungen der Teilnehmerstation 11 anpassbar.

Die Fig. 2 zeigt vier mittels eines Kommunikationsnetzes 12 miteinander verbundene Exemplare der Teilnehmerstation 11. Eine maximale Anzahl Exemplare der Teilnehmerstation 11 im Kommunikationsnetz 12 ist grundsätzlich nicht begrenzt. Eine erste Ausführung 11.1 der Teilnehmerstation 11 ist als ein regionaler Konzentrator ausgebildet, während eine zweite Ausführung 11.2, eine dritte Ausführung 11.3, und eine vierte Ausführung 11.4 der Teilnehmerstation 11 je als Kommunikationseinheit für mindestens ein Datenendgerät (Terminal) 13 ausgeführt sind.

Das Datenendgerät 13 ist beispielsweise ein Elektrizitätszähler, ein Tarifgerät oder eine steuerbare Last (controlled load).

Die erste Ausführung 11.1 ist über einen Kommunikationskanal 14 mit einer dem Konzentrator übergeordneten Einheit 15 - beispielsweise mit einer Datenzentrale - verbunden.

Je nach Bedarf sind die vier Ausführungen 11.1 bis 11.4 bezüglich ihrer Hardware gleich aufgebaut oder dann vor allem in der Anzahl und der Art der vorhandenen Anpassungsschaltungen 6 bzw. 7 bzw. 8 bzw. 9 (Fig. 1) den Anforderungen angepasst ausgeführt.

Als Übertragungsmedium 2 (Fig. 1) ist im allgemeinen jedes in der Kommunikationstechnik bekannte Medium verwendbar. Sofern alle Exemplare der Teilnehmerstation 11 des Kommunikationsnetzes 12 an einem gemeinsamen Energieversorgungsnetz liegen, ist das Übertragungsmedium 2 mit Vorteil das Energieversorgungsnetz.

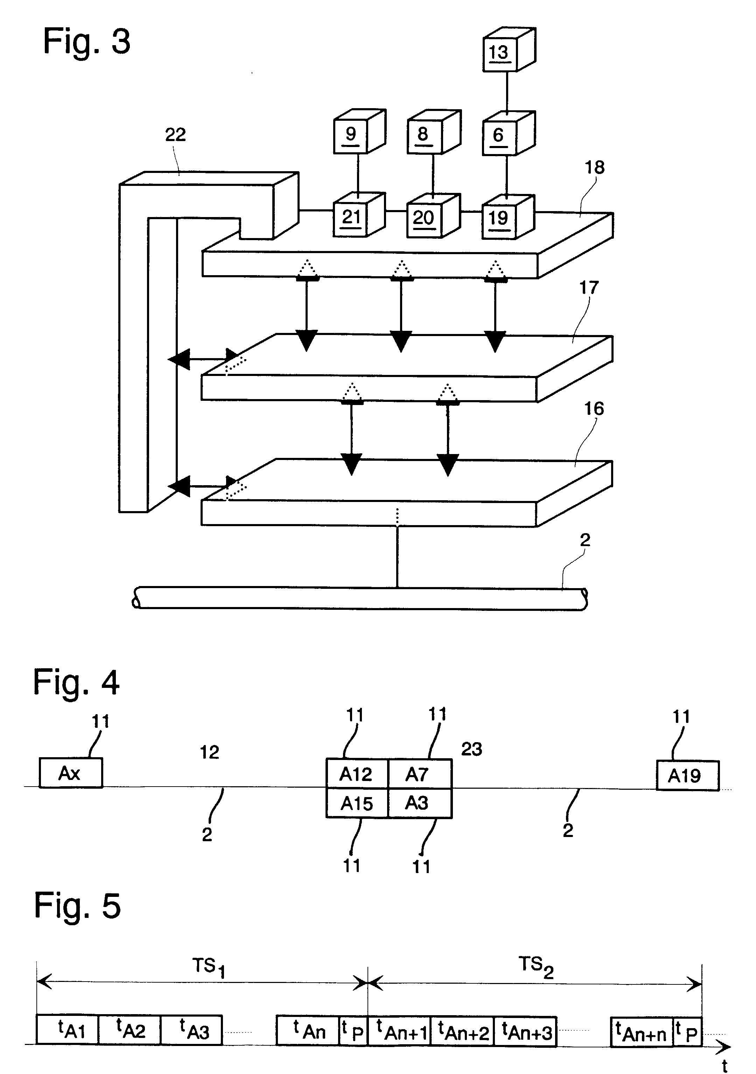

Die Fig. 3 zeigt ein vorteilhaftes Schichtmodell der Teilnehmerstation 11. Das bekannte sieben Schichten aufweisende OSI (Open Systems Interconnection) Modell der ISO (International Organisation for Standardization) ist in vorteilhafter Weise auf drei Schichten reduziert. Mit 16 ist eine erste, im wesentlichen dem Physical Layer des OSI Modells entsprechende Schicht bezeichnet, auf der eine zweite, im wesentlichen dem Data Link Layer des OSI Modells entsprechende Schicht 17 liegt, in welcher die bekannten Aufgaben der Logical Link Control (LLC) und der Medium Access Control (MAC) lösbar sind. Über der zweiten Schicht 17 liegt eine dritte, im wesentlichen dem Application Layer des OSI Modells entsprechende Schicht 18. In bekannter Art ist Information zwischen zwei benachbarten Schichten 18 und 17 bzw. 17 und 16 über Schnittstellen (Service Access Points) austauschbar.

Auf der dritten Schicht 18 ist eine erste die Kommunikationsschnittstelle 6 bedienende Aktivität 19, eine zweite die Schaltereinheit 8 bedienende Aktivität 20 und eine dritte den Eingabekanal 9 bedienende Aktivität 21 angeordnet. Die Kommunikationsschnittstelle 6 ist mit dem Datenendgerät 13 verbunden. In der in der Fig. 3 nicht dargestellten ersten Ausführung 11.1 (Fig. 2) ist die Kommunikationsschnittstelle 6 über den Kommunikationskanal 14 mit der Einheit 15 verbunden.

Die drei gezeichneten Aktivitäten 19, bzw. 20 bzw. 21 sind als ein Beispiel zu betrachten Anzahl und Struktur von Aktivitäten sind von den Anforderungen der Teilnehmerstation 11 bzw. von den vorhandenen Anpassungsschaltungen 6 bzw. 7 bzw. 8 bzw. 9 abhängig.

Mit 22 ist eine vierte auf der dritten Schicht 18 angeordnete Aktivität 22 bezeichnet, welche in vorteilhafter Weise direkt mit der ersten Schicht 16 und mit der zweiten Schicht 17 kommunikationsfähig ist und welche eine Datenbasis mit Parametern der ersten Aktivität 19, der zweiten Aktivität 20 und der dritten Aktivität 21 aufweist. Die in der Datenbasis abgespeicherten Parameter enthalten mit Vorteil Adress- und Zustandsinformation und ermöglichen der zweiten Schicht 17 und auch der ersten Schicht 16 eine schnelle Kommunikation mit den Aktivitäten 19, 20 und 21 der dritten Schicht 18.

Die Aktivität 19 bzw. 20 bzw. 21 bzw. 22 ist als elektronische Schaltung und/oder als Prozess, Programmstück oder Routine verwirklicht.

Die Fig. 4 zeigt einen Teil mit sechs am Übertragungsmedium 2 angeschlossenen und je mit einer Adresse benannten Exemplare der Teilnehmerstation 11 eines Kommunikationsnetzes 12. Die Adresse ist mit Vorteil eine logische Adresse, die der Teilnehmerstation 11 in bekannter Art durch einen hier nicht näher beschriebenen Dienst (Service) zuteilbar ist.

Der Bereich der Adressen sei beispielsweise von A1 bis A512 festgelegt, wobei A1 die niedrigste Adresse ist.

Eine Gruppe (cluster) 23 weist mehrere Exemplare der Teilnehmerstation 11 auf, welche örtlich derart nahe beieinander am Übertragungsmedium 2 angeschlossen sind, dass bei einem synchronen Senden der Gruppe 23 auf dem Übertragungsmedium 2 störende Interferenzen auftreten.

Die störenden Interferenzen treten auf, weil die von verschiedenen Exemplaren der Teilnehmerstation 11 generierten Trägerfrequenzen beim Senden praktisch nicht genau gleich gross sind, und auch deren Phasenlage nicht übereinstimmt. In einem typischen Beispiel bewirken die störenden Interferenzen eine Schwebung.

Die Gruppe 23 weist eine mit der Adresse A12, eine mit der Adresse A15, eine mit der Adresse A7 und eine mit der Adresse A3 benannte Teilnehmerstation 11 auf. Eine mit der Adresse Ax benannte Teilnehmerstation 11 und auch eine mit der Adresse A19 benannte Teilnehmerstation 11 gehören nicht zur Gruppe 23.

Ein vorteilhaftes Verfahren zur Übermittlung einer Nachricht von einer Quellen-Teilnehmerstation 11 zu einer Ziel-Teilnehmerstation 11 im Kommunikationsnetz 12 benutzt mit Vorteil einen von einer vorbestimmten Teilnehmerstation 11 aus startbaren Konfigurationsdienst (Konfigurationsservice), durch den eine Teilnehmerstation 11 entweder als Repeater-Station oder dann als Nicht-Repeater-Station des Kommunikationsnetzes 12 gesetzt wird.

Die Teilnehmerstation schaltet sich nur dann als Repeater-Station, wenn für die Teilnehmerstation während des Konfigurationsdienstes in der Zeitspanne, welche unmittelbar nach dem Start des Konfigurationsdienstes beginnt und mit einem der Teilnehmerstation zugeordneten Zeitpunkt endet, keine weitere Teilnehmerstation mit vorbestimmtem Pegel empfangbar ist.

Dadurch, dass der Konfigurationsdienst sicherstellt, dass auf dem Übertragungsmedium 2 im örtlichen Bereich der Gruppe 23 wie auch sonst in einem Bereich einer Teilnehmerstation 11, in welchem die durch mehrere synchron sendende Exemplare der Teilnehmerstation 11 verursachten störenden Interferenzen auftreten könnten, nur eine einzige Teilnehmerstation 11 als Repeater-Station gesetzt ist, wird das Auftreten von störenden Interferenzen durch zu nahe beieinander angeschlossene Exemplare der Teilnehmerstation 11 wirksam unterdrückt.

Ein Zustand mit der Aussage, ob die Teilnehmerstation 11 als Repeater-Station oder als Nicht-Repeater-Station geschaltet ist, wird vorteilhaft im Konfigurationsspeicher 4 (Fig. 1) abgespeichert. Bei Bedarf ist der Zustand durch das Bedienungselement 5 auch manuell veränderbar.

Das vorteilhafte Verfahren weist folgende, zum Teil synchron ablaufende Verfahrensschritte auf:

Einen ersten Schritt, in dem die Nachricht vor einem ersten Aussenden durch die Quellen-Teilnehmerstation 11 mit einem vorbestimmten Kreditwert versehen wird.

Einen zweiten Schritt, in dem die als Repeater-Station gesetzten Exemplare der Teilnehmerstation 11 die fehlerfrei empfangene Nachricht wieder aussenden, sofern deren Kreditwert nicht null ist, wobei der Kreditwert mit jedem Aussenden der Nachricht um einen bestimmten Betrag verkleinert wird.

Einen dritten Schritt, in dem die als Nicht-Repeater-Station gesetzten Exemplare der Teilnehmerstation 11 die empfangene Nachricht nicht wieder aussenden.

Nach der Auslösung des Konfigurationsdienstes beansprucht der Konfigurationsdienst mindestens ein Zeiffenster TS, welches eine vorbestimmte Anzahl p Antwortpositionen t_{A} aufweist, wobei eine Antwortposition tₖ genau der Adresse Aₖ des Exemplars 11.k der Teilnehmerstation 11 zugeordnet ist.

Vom Start des Konfigurationsdienstes an versucht die Teilnehmerstation 11 bis zum Zeitpunkt der der Teilnehmerstation 11 zugeordneten Antwortposition ein Antwortsignal eines in der gewählten Adressordnung vorangehenden Exemplars der Teilnehmerstation 11 zu empfangen.

Die Adressordnung wird beispielsweise von der niedrigsten zur höchsten Adresse hin gewählt. Es versteht sich von selbst, dass die Adressordnung für den Konfigurationsdienst auch anders definierbar ist.

Das Antwortsignal ist mit Vorteil ein für alle Exemplare der Teilnehmerstation 11 gleichartiges Bitmuster.

Wenn das Antwortsignal eines in der gewählten Adressordnung vorangehenden Exemplars der Teilnehmerstation 11 mindestens mit dem Pegel einer vordefinierten Schwelle U_{T} empfangen wird, schaltet sich die Teilnehmerstation 11 als Nicht-Repeater-Station und sendet während des laufenden Konfigurationsdienstes selbst kein Antwortsignal.

Sofern das Antwortsignal aller in der gewählten Adressordnung vorangehenden Exemplare der Teilnehmerstation 11 mit einem unterhalb der vorbestimmten Schwelle U_{T} liegenden Pegel empfangen wird, schaltet sich die Teilnehmerstation 11 als Repeater-Station und sendet während des Konfigurationsdienstes das Antwortsignal zum Zeitpunkt der der Teilnehmerstation 11 zugeordneten Antwortposition t_{A} aus.

Nachfolgend wird eine vorteilhafte Ausführung des Konfigurationsdienstes in einem Beispiel mit dem die Gruppe 23 (Fig. 4) aufweisenden Kommunikationsnetz 12 dargestellt.

Die mit der Adresse Ax benannte Teilnehmerstation 11 ist zur Auslösung des Konfigurationsdienstes vorbestimmt. Zu diesem Zweck verfügt die mit der Adresse Ax benannte Teilnehmerstation 11 über eine Datenbasis, in welcher die Adressen der zu konfigurierenden Exemplare der Teilnehmerstation 11 abgespeichert sind. Der Adressbereich umfasst im Beispiel A1 bis A20.

Der Konfigurationsdienst wird durch das Aussenden eines Informationsrahmens (frame) an alle Exemplare der Teilnehmerstation 11 - also vorteilhaft mit maximalen Kredit - ausgelöst, so dass jedes Exemplar der Teilnehmerstation 11 den Informationsrahmen empfängt.

Nach dem Auslösen des Konfigurationsdienstes ist eine vordefinierte Zeitspanne für eine Reaktion der Exemplare 11.1 bzw. 11.2 bzw. 11.3 bzw. 11.3 Teilnehmerstation 11 im Kommunikationsnetz 12 reserviert. Nach der Zeitspanne ist das Kommunikationsnetz 12 für weitere Dienste frei. Die vordefinierte Zeitspanne ist abhängig vom benutzten Adressbereich und umfasst mindestens das Zeiffenster TS.

Der Informationsrahmen weist einen als Aufruf zur Konfiguration interpretierbaren Befehlscode sowie eine erste zusätzliche Informationseinheit auf, welche in einer vorteilhaften Art vom Adressbereich der zu konfigurierenden Exemplare der Teilnehmerstation 11 im Kommunikationsnetz 12 abhängig ist.

Vorteilhafterweise ist die zusätzliche erste Informationseinheit die Anzahl der zur Konfiguration notwendigen Zeitfenster TS, wobei ein Zeitfensters TS eine vorbestimmte Anzahl n Adresspositionen t_{A1} bis t_{An} aufweist.

In einer Variante ist die zusätzliche erste Informationseinheit der Adressbereich der vom Konfigurationsdienst anzusprechenden Exemplare der Teilnehmerstation 11.

Bei Bedarf weist der Informationsrahmen eine zusätzliche zweite Informationseinheit auf, welche von einem zur Ablaufzeit des Konfigurationsdienstes noch nicht mit einer logischen Adresse ansprechbarem Exemplar der Teilnehmerstation 11 interpretierbar ist. Beispielsweise unmittelbar nach einer Erweiterung des Kommunikationsnetzes 12 oder auch nach einem Austausch einer defekten Teilnehmerstation 11 sind unter Umständen zur Ablaufzeit des Konfigurationsdienstes neu angeschlossene Exemplare der Teilnehmerstation 11 noch nicht mit einer logischen Adresse ansprechbar.

Eine Adressposition t_{A} ist mit Vorteil ein Zeitabschnitt, der eine definierte Zeitdauer und eine definierte Startzeit aufweist.

In der Fig. 5 sind auf der Zeitachse t ein erstes Zeitfenster TS₁ und ein zweites Zeitfenster TS₂ abgetragen, wobei jedes Zeitfenster die Anzahl n zeitlich in der gewählten Adressordnung aufeinanderfolgende Adresspositionen t_{A1} bis t_{An} bzw. t_{An+1} bis t_{An+n} und am Schluss bei Bedarf eine Pause t_{P} aufweist. Einer Adresse Ak ist damit die Adressposition t_{Ak} zugeordnet. Die einzusetzende Anzahl Zeiffenster TS bzw. die zur Reaktion auf die Auslösung des Konfigurationsdienstes zu reservierende Zeitspanne ist selbstverständlich dem benutzten Adressbereich entsprechend anzupassen.

Für das Beispiel nach der Fig. 4 sei die Anzahl n der Adresspositionen t_{A} mindestens 20, so dass die 20 Adressen der Exemplare der Teilnehmerstation 11 mit Vorteil je einer entsprechenden Adressposition t_{A} eines einzigen Zeiffenster TS zugeordnet sind.

Im Zeiffenster TS, welches auf den Informationsrahmen folgt, versucht jede Teilnehmerstation 11 das Antwortsignal einer anderen Teilnehmerstation 11 zu empfangen, deren Adressposition gegenüber der eigenen Adressposition zeitlich früher definiert ist.

Eine mit der Adresse A1 benannte Teilnehmerstation 11 und auch eine mit der Adresse A2 benannte Teilnehmerstation 11 sind entsprechend weit entfernt von der mit der Adresse A3 benannten Teilnehmerstation 11, welche somit die Antwortsignale der mit der Adresse A2 benannten Teilnehmerstation 11 und der mit der Adresse A3 benannten Teilnehmerstation 11 mit einem Pegel unterhalb der vorbestimmten Schwelle U_{T} empfängt. Die mit der Adresse A3 benannte Teilnehmerstation 11 hat demnach bis zur Adressposition t_{A3} noch kein Antwortsignal einer Teilnehmerstation 11 im Kommunikationsnetz 12 empfangen, welche nahe genug wäre um mit ihr zusammen die störende Interferenzen zu verursachen. Deshalb schaltet sich die mit der Adresse A3 benannte Teilnehmerstation als Repeater-Station und sendet das Antwortsignal im Zeitbereich der Antwortposition t_{A3}. Das Antwortsignal der mit der Adresse A3 benannten Teilnehmerstation 11 wird von den mit der Adresse A7 bzw. A12 bzw. A15 benannten Exemplare der Teilnehmerstation 11 mit einem Pegel oberhalb der vorbestimmten Schwelle U_{T} empfangen, welche sich deshalb als Nicht-Repeater-Station schalten und im Zeitpunkt der ihr zugeordneten Adressposition t_{A7} bzw. t_{A12} bzw. tₐ₁₅ kein Antwortsignal aussenden.

Die mit der Adresse A19 benannte Teilnehmerstation 11 ist so weit von der mit der Adresse A3 benannten Teilnehmerstation 11 entfernt, dass sie deren Antwortsignal mit einem Pegel unterhalb der vorbestimmten Schwelle U_{T} empfängt.

Dass die mit der Adresse A19 benannte Teilnehmerstation 11 im beschriebenen Konfigurationsdienst das Antwortsignal der mit der Adresse A3 benannten Teilnehmerstation 11 mit einem Pegel unterhalb der vorbestimmten Schwelle U_{T} empfängt, heisst nicht, dass die mit der Adresse A19 benannte Teilnehmerstation 11 nicht eine von der Teilnehmerstation 11 normal ausgesandte Information mit der erforderlichen Qualität empfangen könnte, sondern, dass die beiden Teilnehmerstationen 11 voneinander genügend weit entfernt sind, um als Repeater-Station zu arbeiten ohne die störenden Interferenzen zu verursachen.

Mit Vorteil weist die den Konfigurationsdienst auslösende Teilnehmerstation 11 die erste der in der gewählten Ordnung verwendeten Adressen des Adressbereichs auf oder dann ist der ersten Antwortposition t_{A} keine Teilnehmerstation 11 zugeordnet. Dadurch wird die erste Antwortposition t_{A1} für die den Konfigurationsdienst auslösende Teilnehmerstation 11 verfügbar, welche sich vorteilhaft stets als Repeater-Station schaltet und das Antwortsignal an der ersten Antwortposition t_{A1} aussendet.

Bei einer Adresszuteilung an die Teilnehmerstation 11 werden zum Vorteil einer effizienten Ausführung des Konfigurationsdienstes Lücken im Adressraum möglichst vermieden.

Wird die mit der Adresse A3 benannte als Repeater-Station geschaltete Teilnehmerstation 11 aus dem Kommunikationsnetz 12 entfernt, und nachher der Konfigurationsdienst erneut ausgelöst, wird sich die mit der Adresse A7 benannte Teilnehmerstation als Repeater-Station schalten.

Die Teilnehmerstation 11 versucht im Zeiffenster TS der ihr zugeordneten Adressposition t_{A} das Antwortsignal einer mit einer in der gewählten Ordnung tiefer liegenden Adresse benannten Teilnehmerstation 11 zu empfangen. Wird das Antwortsignal mit einem Pegel der höher als die vordefinierte Schwelle U_{T} liegt empfangen, schaltet sich die Teilnehmerstation als Nicht-Repeater-Station. Erreicht kein empfangenes Antwortsignal die vordefinierte Schwelle U_{T}, schaltet sich die Teilnehmerstation 11 als Repeater-Station. Nur eine als Repeater-Station geschaltete Teilnehmerstation 11 sendet das Antwortsignal im Zeitbereich der entsprechenden Antwortposition.

Das Antwortsignal ist mit Vorteil ein vordefiniertes Bitmuster, welches beispielsweise 16-Bit umfasst

Der beschriebene Konfigurationsdienst ermöglicht eine selbsttätige Anpassung des Kommunikationsnetzes 12 nach dem Entfernen bzw. Anschliessen einer Teilnehmerstation 11 im Kommunikationsnetz 12.

Es ist bekannt, Teilnehmerstationen eines Kommunikationsnetzes mit einem Resynchronisierungs-Rahmen periodisch - beispielsweise alle 15 Minuten - neu zu synchronisieren. Mit Vorteil wird im Kommunikationsnetz 12 der beschriebene Konfigurationsdienst nach dem Resynchronisierungs-Rahmen ausgelöst.

In dem in der Fig. 2 beschriebenen Kommunikationsnetz 12 wird der Konfigurationsdienst vorteilhaft durch den regionalen Konzentrator bzw. die erste Ausführung 11.1 ausgelöst.

Mit Vorteil wird der Konfigurationsdienst durch die vierte Aktivität 22 (Fig. 3) ausgelöst und im wesentlichen auch durchgeführt. Dank der verfügbaren direkten Kommunikationsmöglichkeiten zwischen der vierten Aktivität 22 und der ersten Schicht 16 bzw. der zweiten Schicht 17 ist der Konfigurationsdienst anforderungsgerecht implementierbar, so dass mindestens die erforderlichen Antwortzeiten der vierten Aktivität 22 erreichbar sind.

Die Anzahl r der als Repeater-Station geschalteten Exemplare der Teilnehmerstation 11 ist während des Betriebs des Kommunikationsnetzes 12 durch den Konfigurationsdienst veränderbar. Allgemein kann die Anzahl r vor und nach dem Konfigurationsdienst einen anderen Wert aufweisen.

Durch eine zyklische Auslösung des Konfigurationsdienstes - beispielsweise alle 15 Minuten - ist das Kommunikationsnetz selbsttätig sich allfällig verändernden Übertragungsverhältnissen anpassbar, welche sich beispielsweise durch Anschliessen bzw. Entfernen eines Exemplars der Teilnehmerstation 11 oder auch durch Änderungen der Belastung bzw. Impedanz des Kommunikationsnetzes 12 ergeben.

## Patentansprüche

1. Verfahren zur Übermittlung einer Nachricht von einer Quellen-Teilnehmerstation (11) zu einer Ziel-Teilnehmerstation (11) in einem Kommunikationsnetz (12) mit mehreren Exemplaren (11.1; 11.2; 11.3; 11.4) der Teilnehmerstation (11) welche an einem gemeinsamen Übertragungsmedium (2) angeschlossen und als Sender- und Empfängerstation für die Nachricht ausgelegt sind, **gekennzeichnet durch** einen von einer vorbestimmten Teilnehmerstation (11.4) aus startbaren Konfigurationsdienst, durch den die Teilnehmerstationen (11) entweder als Repeater-Station oder dann als Nicht-Repeater-Station des Kommunikationsnetzes (12) geschaltet werden, wobei der Konfigurationsdienst sicherstellt, dass in einer Gruppe mit mehren Exemplaren der Teilnehmerstation (11), welche derart nahe beieinander am Übertragungsmedium (2) angeschlossen sind, dass bei synchronem Senden der Gruppe die Übermittlung störende Interferenzen entstehen, höchstens eine einzige Teilnehmerstation (11) als Repeater-Station geschaltet ist,
wobei
die Nachricht vor einem ersten Aussenden durch die Quellen-Teilnehmerstation (11) mit einem vorbestimmten Kreditwert versehen wird,
und wobei eine als Repeater-Station gesetzte Teilnehmerstation (11) die empfangene Nachricht wieder aussendet, sofern deren Kreditwert nicht null ist, wobei der Kreditwert mit jedem Aussenden der Nachricht um einen bestimmten Betrag verkleinert wird, und
wobei eine als Nicht-Repeater-Station gesetzte Teilnehmerstation (11) die empfangene Nachricht nicht wieder aussendet.

2. Verfahren nach Anspruch 1, **dadurch gekennzeichnet**,
dass der Konfigurationsdienst mindestens ein Zeitfenster (TS; TS₁; TS₂) beansprucht, welches eine vorbestimmte Anzahl (n) Antwortpositionen (t_{A}) aufweist, wobei eine Antwortposition (tₖ) genau einer Adresse (Aₖ) einer Teilnehmerstation (11) zugeordnet ist,
dass die Teilnehmerstation (11) vom Start des Konfigurationsdienstes an bis zum Zeitpunkt der der Teilnehmerstation (11) zugeordneten Antwortposition (t_{A}) versucht, ein Antwortsignal eines in der gewählten Adressordnung vorangehenden Exemplars der Teilnehmerstation (11) zu empfangen,
dass, wenn das Antwortsignal des vorangehenden Exemplars mindestens mit einem eine vorbestimmte Schwelle (U_{T}) überschreitenden Pegel empfangen worden ist, sich die Teilnehmerstation (11) als Nicht-Repeater-Station schaltet und während des Konfigurationsdienstes kein Antwortsignal sendet, und
dass, wenn das Antwortsignal aller vorangehenden Exemplare der Teilnehmerstation (11) von der Teilnehmerstation mit einem Pegel unterhalb der vorbestimmten Schwelle (U_{T}) empfangen wird, sich die Teilnehmerstation (11) als Repeater-Station schaltet und während des Konfigurationsdienstes das Antwortsignal zum Zeitpunkt der Antwortposition (t_{T}) der Teilnehmerstation (11) aussendet.

3. Verfahren nach einem vorangehenden Anspruch, **dadurch gekennzeichnet**, dass der Konfigurationsdienst durch das Aussenden eines Informationsrahmens ausgelöst wird, wobei der Informationsrahmen einen als Aufruf zur Konfiguration interpretierbaren Befehlscode und mindestens eine weitere vom Adressbereich der zu konfigurierenden Exemplare der Teilnehmerstation (11) abhängigen Informationseinheit aufweist.

4. Einrichtung zur Durchführung des Verfahrens nach einem der Ansprüche 1 bis 3 mit mehreren Exemplaren (11.1; 11.2; 11;3; 11.4) einer Teilnehmerstation 11, die einen über einen Modulator/Demodulator (1) mit dem Übertragungsmedium (2) verbundenen Prozessrechner (3) sowie mindestens eine mit dem Prozessrechner (3) verbundene Anpassungsschaltung (6; 7; 8; 9) für ein Datenendgerät (13) bzw. für eine der Teilnehmerstation (11) übergeordneten Einheit (15) aufweist, **dadurch gekennzeichnet,** dass der Prozessrechner über einen auch mittels eines Bedienungselementes (5) manuell veränderbaren Konfigurationsspeicher (4) verfügt,
dass im Konfigurationsspeicher (4) ein binärer Zustand speicherbar ist und dass die Teilnehmerstation (11) aufgrund des Inhaltes des Konfigurationsspeichers (4) eine mit Kredit versehene Nachricht entweder wieder aussendet oder dann nicht wieder aussendet.

## Claims

1. A method of transmitting a message from a source subscriber station (11) to a destination subscriber station (11) in a communication network (12) having a plurality of samples (11.1; 11.2; 11.3: 11.4) of the subscriber station (11), which are connected to a common transmission medium (2) and which are in the form of transmitting and receiving stations for the message characterised by a configuration service which can be started from a predetermined subscriber station (11.4) and by which the subscriber stations (11) are connected either as a repeater station or then as a non-repeater station of the communication network (12), wherein the configuration service ensures that in a group with a plurality of samples of the subscriber station (11) which are connected to the transmission medium (2) close together in such a way that when the group is synchronously transmitting interference phenomena which disturb the transmission are produced, at most one single subscriber station (11) is switched as a repeater station, wherein the message is provided with a predetermined credit value prior to a first emission by the source subscriber station (11), wherein a subscriber station (11) which is set as a repeater station emits the received message again if the credit value thereof is not zero, wherein the credit value is reduced by a given amount with each emission of the message, and wherein a subscriber station (11) which is set as a non-repeater station does not emit the received message again.

2. A method according to claim 1 characterised in that
the configuration service occupies at least one time window (TS; TS₁; TS₂) which has a predetermined number (n) of answer positions (t_{A}), wherein an answer position (tₖ) is precisely associated with an address (Aₖ) of a subscriber station (11),
the subscriber station (11), from the start of the configuration service to the time of the answer position (t_{A}) associated with the subscriber station (11) attempts to receive an answer signal of a sample of the subscriber station (11), which precedes in the selected address order,
when the answer signal of the preceding sample has been received at least with a level exceeding a predetermined threshold (U_{T}) the subscriber station (11) is switched as a non-repeater station and does not send an answer signal during the configuration service, and
when the answer signal of all preceding samples of the subscriber station (11) is received by the subscriber station with a level below the predetermined threshold (U_{T}) the subscriber station (11) is switched as a repeater station and during the configuration service emits the answer signal at the time of the answer position (t_{T}) of the subscriber station (11).

3. A method according to a preceding claim characterised in that the configuration service is triggered by the emission of an information frame wherein the information frame has a command code which can be interpreted as a call-up for the configuration and at least one further information unit which is dependent on the address region of the samples of the subscriber station (11), which are to be configured.

4. Apparatus for carrying out the method according to one of claims 1 to 3 comprising a plurality of samples (11.1; 11.2; 11.3; 11.4) of a subscriber station (11), which has a process computer (3) connected to the transmission medium (2) by way of a modulator/demodulator (1) and at least one matching circuit (6; 7; 8; 9), connected to the process computer (3), for a data terminal (13) or for a unit (15) which is over the subscriber station (11), characterised in that the process computer has a configuration memory (4) which is also manually variable by means of an operating element (5), that a binary state can be stored in the configuration memory (4) and that on the basis of the content of the configuration memory (4) the subscriber station (11) either again emits or then does not again emit a message provided with credit.

## Revendications

1. Procédé pour transmettre une information depuis un poste d'abonné (11) d'origine en direction d'un poste d'abonné (11) de destination dans un réseau de communication (12) comportant plusieurs exemplaires (11.1 ; 11.2 ; 11.3 ; 11.4) du poste d'abonné (11), qui sont raccordés à un même milieu de transmission (2) et sont conçus en tant que poste émetteur-récepteur pour le message, caractérisé par un service de configuration, qui peut démarrer à partir d'un poste d'abonné prédéterminé (11.4) et au moyen duquel les postes d'abonnés (11) sont branchés soit en tant que poste répéteur, soit en tant que poste non répéteur du réseau de communication (12), le service de configuration garantissant que dans un groupe comportant plusieurs exemplaires du poste d'abonné (11), qui sont raccordés au milieu de transmission (2) en étant suffisamment proches les uns des autres pour que, dans le cas de l'émission synchrone du groupe, il apparaisse des interférences perturbant la transmission, au maximum un seul poste d'abonné (11) est branché en tant que poste répéteur,
selon lequel le message est affecté d'une valeur de crédit prédéterminée avant une première émission par le poste d'abonné (11) d'origine, et
selon lequel un poste d'abonné (11) activé en tant que poste répéteur réémet le message reçu dans la mesure où sa valeur de crédit n'est pas nulle, la valeur de crédit étant réduite d'un certain montant lors de chaque émission du message, et
selon lequel un poste d'abonné (11) activé en tant que poste non répéteur ne réémet pas le message reçu.

2. Procédé selon la revendication 1, caractérisé en ce
que le service de configuration requiert au moins une fenêtre temporelle (TS ; TS₁ ; TS₂), qui comporte un nombre prédéterminé (n) de positions de réponse (t_{A}) et une position de réponse (tₖ) sont associées de façon précise à une adressent (Aₖ) d'un poste d'abonné (11),
que le poste d'abonné (11) essaie, depuis le début du service de configuration jusqu'à l'instant de la position de réponse (t_{A}) associée au poste d'abonné (11), de recevoir un signal de réponse d'un exemplaire, qui est précédent dans l'ordre sélectionné d'adresses, du poste d'abonné (11),
que, lorsque le signal de réponse de l'exemplaire précédent a été reçu au moins avec un niveau dépassant un seuil prédéterminé (U_{T}), le poste d'abonné (11) est commuté en tant que poste non répéteur et n'émet aucun signal de réponse pendant le service de configuration, et
que, lorsque le signal de réponse de tous les exemplaires précédents du poste d'abonné (11) est reçu du poste d'abonné avec un niveau inférieur au seuil prédéterminé (U_{T}), le poste d'abonné (11) est commuté en tant que poste répéteur et émet le signal de réponse à l'instant de la position de réponse (t_{T}) du poste d'abonné (11), pendant le service de configuration.

3. Procédé selon une revendication précédente, caractérisé en ce que le service de configuration est déclenché par l'émission d'une trame d'information, la trame d'information possédant un code d'instruction pouvant être interprété en tant qu'appel pour la configuration, et au moins une autre unité d'information, qui est dépend de la zone d'adresses des exemplaires à configurer du poste d'abonné (11).

4. Dispositif pour la mise en oeuvre du procédé selon l'une des revendications 1 à 3, comportant plusieurs exemplaires (11.1 ; 11.2 ; 11.3 ; 11.4) d'un poste d'abonné (11), qui possède un calculateur de processus (3), qui est relié au milieu de transmission (2) par l'intermédiaire d'un modulateur/démodulateur (1) ainsi qu'au moins un circuit d'adaptation (6 ; 7 ; 8 ; 9) relié au calculateur de processus (3), pour un terminal de transmission de données (13) ou pour une unité (15) située à un rang supérieur par rapport au poste d'abonné (11), caractérisé en ce
que le calculateur de processus dispose d'une mémoire de configuration (4) pouvant être modifiée manuellement également à l'aide d'un élément de commande (5) ;
qu'un état binaire peut être mémorisé dans la mémoire de configuration (4), et
que sur la base du contenu de la mémoire de configuration (4), le poste d'abonné (11) réémet un message affecté d'un crédit ou ne le réémet pas.
